# EUROPÄISCHE PATENTANMELDUNG

(11) **EP 1 594 083 A1**
(43) Veröffentlichungstag der Anmeldung: **09.11.2005**
(21) Anmeldenummer: 04291192.5
(22) Anmeldetag: 07.05.2004
(51) Int. Cl.: G06T 1/00

(54) **Verfahren zum Zusenden von digitalen Kopien geschützter Medien sowie Netzzugangseinrichtung**

(71) Anmelder: ALCATEL, 75008 Paris (FR)
(72) Erfinder: Kessler, Marcus, Dr., 70329 Stuttgart (DE); Tomsu, Marco, 71254 Ditzingen (DE); Domschitz, Peter, 70191 Stuttgart (DE)
(74) Vertreter: Brose, Gerhard

(57) **Zusammenfassung**

Verfahren zum Zusenden von digitalen Kopien geschützter Medien unter Einsatz von empfängerindividuellen digitalen Wasserzeichen von einem Medienserver (1) über ein Telekommunikationsnetz (2) und eine Netzzugangseinrichtung (3, 4) mit Anschlußeinrichtungen an ein Endteilnehmergerät (5-8), bei dem eine digitale Kopie, die an ein bestimmtes Endteilnehmergerät (5-8) des Telekommunikationsnetzes (2) gesendet werden soll in derjenigen Netzzugangseinrichtung (3, 4) zur Verfügung gestellt wird, von der aus das Endteilnehmergerät (5-8) an das Telekommunikationsnetz (2) angeschlossen ist, bei dem die mit dem digitalen Wasserzeichen versehene digitale Kopie über diejenige Anschlußeinrichtung der Netzzugangseinrichtung (3, 4) an das Endteilnehmergerät (5-8) abgesendet wird, über die dieses Endteilnehmergerät (5-8) angeschlossen ist, wobei das digitale Wasserzeichen in dieser Netzzugangseinrichtung (3, 4) in die zu sendende digitale Kopie eingeprägt wird, wobei das digitale Wasserzeichen mindestens Angaben enthält, die der Identifizierung desjenigen Endteilnehmers dienen, an den die digitale Kopie gesendet werden soll.

## Beschreibung

Die Erfindung betrifft ein Verfahren zum Senden von digitalen Kopien geschützter Medien mit empfängerindividuellem Wasserzeichen nach dem Oberbegriff des Anspruchs 1 und eine Netzzugangseinrichtung nach dem Oberbegriff des Anspruchs 4.

Die schnell steigende Zahl an Breitbandanschlüssen wie z.B. ADSL für Privatkunden hat auch die Nachfrage nach Multimedia-Diensten hoher Güte, die eine große Bandbreite benötigen, wie z.B. Video-On-Demand oder das Herunterladen von Musik aus dem Internet, stark ansteigen lassen. Diese Daten werden in digitaler Form übertragen und weisen eine Qualität auf, die mit der einer DVD oder CD vergleichbar ist. Solche Dateneigenschaften wiederum ermöglichen die Herstellung einer hohen Anzahl von Kopien der Daten ohne Qualitätsverlust und dadurch natürlich auch die Herstellung und Verbreitung illegaler Kopien.

Um diesem Problem Herr zu werden, wurde das Konzept des elektronischen Wasserzeichens bei der Übertragung von Medien eingeführt, bei dem die Daten elektronisch markiert werden. Diese Markierung wird dabei durch nur kleine Änderungen der zu übertragenden Signale eingeprägt und ist so für die menschlichen Sinne nicht wahrnehmbar. Durch geeignete Wahl einer Verschlüsselung für das Wasserzeichen wird zudem erreicht, daß das Wasserzeichen untrennbar mit den zu übertragenden Daten verknüpft wird. Aufgrund der Informationen über den Sender und den Empfänger der Daten, die im Wasserzeichen der Kopie enthalten sind, läßt sich bei den Kopien eindeutig erschließen, ob der Besitzer diese legal erworben hat, also mit dem Empfänger identisch ist, oder ob es sich um Raubkopien handelt.

Im WO-Patent 01/67667 wird beschrieben, wie empfängerspezifische Wasserzeichen in Kombination mit Verschlüsselungstechniken benutzt werden, um dadurch sowohl den Ursprung von unerlaubten Kopien ermitteln zu können, als auch die Wahrscheinlichkeit zu erhöhen, daß nur der rechtmäßige Empfänger mittels eines Schlüssels den Medieninhalt wiedergeben kann.

Heutzutage besteht nur die Möglichkeit, das Wasserzeichen in einem Medienserver anzubringen, was im Falle der Übertragung der gleichen Daten an viele oder gar alle Endteilnehmer aufgrund des empfängerindividuellen Wasserzeichens dazu führt, daß für jeden Empfänger ein eigener markierter Datenstrom vom Server über das Netz und die Netzzugangseinrichtung an den Endteilnehmer geschickt werden muß. Da dies zu einer außerordentlich hohen Server- und Netzauslastung führt, ist eine empfängerindividuelle Markierung der Daten auf diesem Weg unpraktikabel. Zudem gibt es keine Garantie dafür, daß der Empfänger der Daten diese auch bestellt hat und damit der rechtmäßige Besitzer ist, da die Daten auf dem Weg vom Server zur Netzzugangseinrichtung abgegriffen werden können, auch wenn die Daten verschlüsselt übertragen werden. Wasserzeichen, die im Server dem Datenstrom eingeprägt werden, sind deshalb nur zur Identifizierung des Absenders, d.h. des Inhabers des Urheberrechts, nicht jedoch zur zweifelsfreien Identifizierung des Empfängers geeignet. Solche Wasserzeichen sind nützlich für die Hersteller von CDs und DVDs und für die Polizei, um Fälschungen zu erkennen, bei denen die urheberrechtliche Markierung fehlt oder falsch ist, jedoch werden dadurch Softwarepiraten kaum vom Fälschen oder Raubkopieren abgehalten.

Eine alternative Möglichkeit, Raubkopien zu verhindern, besteht darin, in den Geräten der Endteilnehmer einen Kopierschutz, wie z.B. TCPA (Trusted Computing Platform Architecture) einzubauen. Diese Arten von Kopierschutz ermöglichen die Wiedergabe der Mediendaten nur mit einem bestimmten Wiedergabegerät und verhindern somit die Wiedergabe von Raubkopien auf einem anderen als dem ursprünglich vorgesehenen Wiedergabegerät. Allerdings wird dadurch auch die legale Wiedergabe von privaten Kopien auf anderen Wiedergabegeräten unterbunden, was eine Beschneidung der mit dem Kauf der Medien erworbenen Rechte darstellt.

Der Erfindung liegt die Aufgabe zugrunde, an der oben beschriebenen Situation Abhilfe zu schaffen.

Diese Aufgabe wird erfindungsgemäß gelöst durch ein Verfahren nach der Lehre des Anspruchs 1 und durch eine Netzzugangseinrichtung nach der Lehre des Anspruchs 4.

Jegliche Art von Markierung, um z.B. Multimediainhalte zu individualisieren wird dabei von einer dem jeweiligen Endteilnehmer zugeordneten Netzzugangseinrichtung vorgenommen, die sich im Pfad zwischen dem Medienserver und dem Endteilnehmergerät befindet. Da dieser Pfad entweder durch eine separate Leitung oder eine virtuelle Verbindung repräsentiert wird, kann sehr sicher gewährleistet werden, daß die individualisierten Medieninhalte wirklich nur vom rechtmäßigen Besitzer empfangen werden können. Damit wiederum kann auch der Ursprung von illegalen Kopien sehr sicher herausgefunden werden.

Jeder Endteilnehmer ist wie erwähnt durch eine spezielle virtuelle oder physikalische Verbindung an einer speziellen Netzzugangseinrichtung angeschlossen. Dadurch wird der Anbieter des Netzzugangs (Network Access Provider oder kurz NAP) als Eigentümer der Bitübertragungsschicht (Physical Layer) in die Lage versetzt, den um einen Dienst nachfragenden Endteilnehmer zu identifizieren. Vorausgesetzt, daß zwischen dem Anbieter von Diensten und dem Anbieter des Netzzugangs ein Vertrag besteht, kann letzterer in der dem Endteilnehmer zugeordneten Netzzugangseinrichtung ein Dienstobjekt basierend auf Software oder Hardware instanziieren. Die Funktionalität dieses Dienstobjekts ist ähnlich der Codeumwandlung bei Medien. Die Endteilnehmeridentität in Verbindung mit anderen Transaktionsdaten, wie z.B. der Identität des Besitzers des Urheberrechts oder des Datums des Downloads wird in Form eines Wasserzeichens an den Multimediainhalt angebracht, der über die Netzzugangseinrichtung übertragen wird. Dadurch wird ein eindeutiger Zusammenhang zwischen dem Dienstanbieter, dem Dienst selbst und dem Endteilnehmer hergestellt und ermöglicht die Strafverfolgung von Raubkopierern. Eine Entfernung des Wasserzeichens ist dabei nur unter Inkaufnahme von großen Qualitätsverlusten möglich. Da das Wasserzeichen im dem dem Endteilnehmer zugeordneten Netzzugangselement an den Datenstrom angebracht wird, eignet sich dieses Verfahren nicht nur für individuelle Downloads oder Streaming, sondern auch für die Übertragung von Multimediainhalten an mehrere Endteilnehmer gleichzeitig oder sogar für Rundsendungen. Ferner ist das Verfahren auch für das Anbieten von Multimediainhalten geeignet, wenn diese Multimediainhalte in einem Cache gespeichert vorliegen, wobei in diesem Fall das Wasserzeichen erst angebracht wird, nachdem die Daten aus dem Cache geholt wurden.

Das Instanziieren von solchen Dienstobjekten, mit denen Wasserzeichen an Multimediainhalte in den Netzzugangseinrichtungen angebracht werden können, kann für jeden Endteilnehmer individuell erfolgen, ohne daß die Netzkapazität unakzeptabel stark beansprucht wird, wie dies der Fall wäre, wenn die individuellen Markierungen im Medienserver angebracht werden würden. Dadurch wird also auch im Falle der Übertragung der gleichen Daten an viele oder gar alle Endteilnehmer eine individuelle Markierung mittels Wasserzeichen ermöglicht.

Das Anbringen dieser individuellen und unentfernbaren Wasserzeichen bedarf keinerlei aufwendiger Änderungen oder Erweiterungen der Einrichtungen auf Endteilnehmer- oder Dienstanbieterseite und ist damit kostengünstig und flexibel durchführbar.

Zudem wird durch das Anbringen des Wasserzeichens in einer dem Endteilnehmer zugeordneten Netzzugangseinrichtung zusätzlich das Risiko einer fehlerhaften Zuordnung von Wasserzeichen und Inhalt verringert.

Das Verfahren ist v.a. auf Telekommunikationsunternehmen zugeschnitten, die als Netzzugangsanbieter fungieren, da diese die ausschließliche Kontrolle über die Netzzugangseinrichtung innehaben und damit das Anbringen der Wasserzeichen übernehmen können.

Aufgrund der Kontrolle des Netzzugangsanbieters über die Netzzugangseinrichtung und der technischen Realisierung des Pfads zwischen der Netzzugangseinrichtung und dem Endteilnehmergerät durch eine separate Leitung oder eine virtuelle Verbindung ist diese Verbindung zwischen Netzzugangseinrichtung und Endteilnehmergerät relativ sicher und die Gefahr der Datenmanipulation und des Raubkopierens wird dadurch minimiert. Die Übertragung der Multimediainhalte kann auf dem Netzwerkpfad zwischen Medienserver und Netzzugangseinrichtung durchaus auch verschlüsselt werden, um dadurch eine zusätzliche Sicherheit vor Raubkopierern zu erhalten.

Durch das beschriebene Verfahren bleibt den Endteilnehmern die ihnen auch von Rechts wegen zustehende Möglichkeit erhalten, Sicherungskopien anzufertigen.

Die vertragliche Zusammenarbeit zwischen Dienstanbieter und Netzzugangsanbieter eröffnet dem Dienstanbieter potentiellen Zugriff auf den großen Kundenstamm des Netzzugangsanbieters und damit die Aussicht auf zusätzliche Aufträge. Zudem sind Multimediadienste dadurch mit zusätzlichen Diensten, wie z.B. Bezahldiensten o.ä., die ebenfalls von den Netzzugangsanbietern offeriert werden, kombinierbar.

Weitere Ausgestaltungen der Erfindung sind den Unteransprüchen und der nachfolgenden Beschreibung zu entnehmen.

Im folgenden wird die Erfindung unter Zuhilfenahme der beiliegenden Zeichnung weiter erläutert.

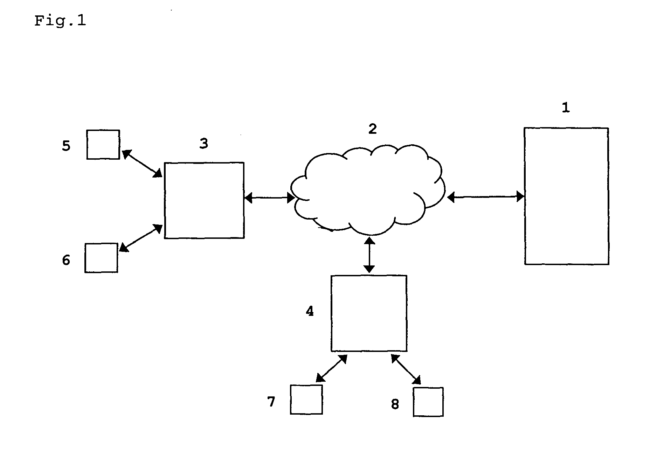

Figur 1 zeigt eine beispielhafte Netzwerkumgebung, in der die Erfindung implementiert werden kann.

Die Netzwerkumgebung aus Figur 1 beinhaltet einen Medienserver (1), ein Telekommunikationsnetz (2), erfindungsgemäße Netzzugangseinrichtungen (3, 4) und Endteilnehmergeräte (5-8). Der Medienserver (1) kann mit einer Vielzahl der Endteilnehmergeräte (5-8) über das Telekommunikationsnetz (2) und die Netzzugangseinrichtungen (3, 4) kommunizieren.

Das Telekommunikationsnetz (2) kann dabei das Internet sein, aber auch ein beliebiges anderes Netz, wie z.B. ein sogenanntes Local Area Network (LAN) oder ein Wide Area Network (WAN). Dieses Telekommunikationsnetz (2) kann dabei sowohl in einer Festnetz- als auch in einer Mobilfunkumgebung implementiert sein.

Der Medienserver (1) ist ein Netzwerkgerät, um über das Telekommunikationsnetz (2) zu kommunizieren. Dieser Medienserver (1) kann dabei entweder einfach ein Rechner sein, der z.B. als Web Server fungiert, als auch spezielle Netzwerkfunktionen umfassen, wie z.B. die von einem Router, Switch oder Gateway. Der Medienserver (1) weist zudem Mittel zum Speichern von Medien, wie z.B. Festplatten, Compact Disks (CD), Digital Versatile Disks (DVD) oder ähnliches auf. Die Medien können aus Video- und/oder Audiodaten, wie z.B. MPEG-Daten (MPEG=Moving Picture Experts Group), oder ähnlichen Daten bestehen. Für die Kommunikation über das Telekommunikationsnetz (2) weist der Medienserver (1) Mittel sowohl zum Verarbeiten, als auch zum Empfangen und/oder Versenden von Medien auf.

Die erfindungsgemäßen Netzzugangseinrichtungen (3, 4) weisen Mittel zum Empfangen, Senden, Speichern und Bearbeiten von Daten wie z.B. digitalen Kopien von Medien auf. Die Mittel zum Bearbeiten von Daten ermöglichen dabei in die zu versendenden digitalen Kopien digitale Wasserzeichen einzuprägen, die zumindest Angaben enthalten, die der Identifizierung desjenigen Endteilnehmers dienen, an den die digitalen Kopien gesendet werden sollen. Über eine oder mehrere Anschlußeinrichtungen ist die Netzzugangseinrichtung (3, 4) an das Telekommunikationsnetz (2) wie z.B. das Internet angeschlossen. Über weitere Anschlußeinrichtungen der Netzzugangseinrichtungen (3, 4) besteht die Möglichkeit des Datenaustausches mit Endteilnehmergeräten (5-8), die mittels virtueller Verbindungen angeschlossen sind.

In einer weiteren Ausführung weisen die Netzzugangseinrichtungen (3, 4) Mittel auf, die die Entschlüsselung von verschlüsselten digitalen Kopien ermöglichen, die die Netzzugangseinrichtungen (3, 4) über die Anschlußeinrichtungen an das Telekommunikationsnetz (2) erhalten haben. Die Verschlüsselung der Daten auf dem Pfad zwischen dem Medienserver (1) und den Netzzugangseinrichtungen (3, 4) dient dabei als zusätzliche Sicherung gegenüber illegalem Kopieren.

In einer weiteren Ausführung weisen die Netzzugangseinrichtungen (3, 4) Mittel auf, die die Verschlüsselung von digitalen Kopien ermöglichen, in die zuvor digitale Wasserzeichen eingeprägt wurden und die nach der Verschlüsselung über die Anschlußeinrichtungen an die entsprechenden Endteilnehmergeräte (5-8) gesendet werden. Die Verschlüsselung der Daten auf dem Pfad zwischen den Netzzugangseinrichtungen (3, 4) und den Endteilnehmergeräten (5-8) dient dabei als zusätzliche Sicherung gegenüber illegalem Kopieren.

Die Endteilnehmergeräte (5-8) können diejenigen digitalen Kopien empfangen, die über eine spezielle physikalische oder virtuelle Verbindung von einer der Netzzugangseinrichtungen (3, 4) an sie gesendet werden. Die Endteilnehmergeräte (5-8) können dabei als Computer realisiert sein, wie z.B. als Personal Computer (PC) oder Laptop Computer, aber auch wiederum einen Medienserver repräsentieren. Zudem können die Endteilnehmergeräte (5-8) auch für tragbare elektronische Geräte, wie z.B. den Personal Data Assistant (PDA) oder Mobiltelefone stehen. Auf den Endteilnehmergeräten (5-8) können Anwendungen, wie z.B. Windows Media Player™ oder Real Player™ zum Darstellen der empfangenen digitalen Kopien der Medien laufen.

Bei dem erfindungsgemäßen Verfahren werden digitale Kopien von Medien von dem Medienserver (1) über das Telekommunikationsnetz (2) und eine Netzzugangseinrichtung (3, 4) an eines der Endteilnehmergeräte (5-8) gesendet, wobei in der Netzzugangseinrichtung (3, 4) in die digitale Kopie ein digitales Wasserzeichen eingeprägt wird. Dieses digitale Wasserzeichen enthält mindestens Informationen, die der Identifizierung desjenigen Endteilnehmers dienen, für den die digitale Kopie bestimmt ist, kann darüber hinaus aber z.B. auch Informationen über die Datenquelle oder das Datum des Versands enthalten. Anschließend wird die mit dem digitalen Wasserzeichen versehene digitale Kopie über diejenige Anschlußeinrichtung der Netzzugangseinrichtung (3, 4) versendet, über die derjenige Endteilnehmer angeschlossen ist, für den die digitale Kopie bestimmt ist.

In einer weiteren Ausführung werden die digitalen Kopien der Medien im Medienserver (1) zuerst verschlüsselt, bevor sie vom Medienserver (1) über das Telekommunikationsnetz (2) zur Netzzugangseinrichtung (3, 4) gesendet werden. In der Netzzugangseinrichtung (3, 4) werden die digitalen Kopien dann wieder entschlüsselt, bevor die digitalen Wasserzeichen in die digitalen Kopien eingeprägt werden und diese dann an die Endteilnehmergeräte (5-8) gesendet werden.

In einer weiteren Ausführung werden die digitalen Kopien der Medien in der Netzzugangseinrichtung (3, 4) verschlüsselt, nachdem die digitalen Wasserzeichen in die digitalen Kopien eingeprägt wurden und anschließend werden die digitalen Kopien verschlüsselt an die Endteilnehmergeräte (5-8) gesendet.

## Patentansprüche

1. Verfahren zum Zusenden von digitalen Kopien geschützter Medien unter Einsatz von empfängerindividuellen digitalen Wasserzeichen von einem Medienserver (1) über ein Telekommunikationsnetz (2) und eine Netzzugangseinrichtung (3, 4) mit Anschlußeinrichtungen an ein Endteilnehmergerät (5-8), bei dem eine digitale Kopie, die an ein bestimmtes Endteilnehmergerät (5-8) des Telekommunikationsnetzes (2) gesendet werden soll in derjenigen Netzzugangseinrichtung (3, 4) zur Verfügung gestellt wird, von der aus das Endteilnehmergerät (5-8) an das Telekommunikationsnetz (2) angeschlossen ist, bei dem die mit dem digitalen Wasserzeichen versehene digitale Kopie über diejenige Anschlußeinrichtung der Netzzugangseinrichtung (3, 4) an das Endteilnehmergerät (5-8) abgesendet wird, über die dieses Endteilnehmergerät (5-8) angeschlossen ist **dadurch gekennzeichnet, daß** das digitale Wasserzeichen in dieser Netzzugangseinrichtung (3, 4) in die zu sendende digitale Kopie eingeprägt wird, wobei das digitale Wasserzeichen mindestens Angaben enthält, die der Identifizierung desjenigen Endteilnehmers dienen, an den die digitale Kopie gesendet wird.

2. Verfahren nach Anspruch 1, **dadurch gekennzeichnet, daß** die digitale Kopie verschlüsselt zwischen dem Medienserver (1) über das Telekommunikationsnetz (2) zur Netzzugangseinrichtung (3, 4) gesendet wird und in der Netzzugangseinrichtung (3, 4) entschlüsselt wird bevor das digitale Wasserzeichen in die digitale Kopie eingeprägt wird und diese an das Endteilnehmergerät (5-8) gesendet wird.

3. Verfahren nach Anspruch 1, **dadurch gekennzeichnet, daß** die digitale Kopie nach dem Einprägen des digitalen Wasserzeichens und vor dem Senden zum Endteilnehmergerät (5-8) verschlüsselt wird.

4. Netzzugangseinrichtung (3, 4) mit Anschlußeinrichtungen zum Anschluß von Endteilnehmergeräten (5-8) eines Telekommunikationsnetzes (2) an dieses Telekommunikationsnetz (2) mittels teilnehmerindividuell gesicherter Anschlußkanäle, insbesondere zum Anschluß an das Internet, **dadurch gekennzeichnet, daß** die Netzzugangseinrichtung (3, 4) Mittel aufweist, um eine digitale Kopie, die an ein bestimmtes Endteilnehmergerät (5-8) eines Telekommunikationsnetzes (2) gesendet werden soll, zur Verfügung zu stellen, um ein digitales Wasserzeichen in die zu sendende digitale Kopie einzuprägen, wobei das digitale Wasserzeichen mindestens Angaben enthält, die der Identifizierung desjenigen Endteilnehmers dienen, an den die digitale Kopie gesendet werden soll und um die mit dem digitalen Wasserzeichen versehene digitale Kopie über diejenige Anschlußeinrichtung der Netzzugangseinrichtung (3, 4) an das Endteilnehmergerät (5-8) abzusenden, über die dieses Endteilnehmergerät (5-8) angeschlossen ist.

5. Netzzugangseinrichtung (3, 4) nach Anspruch 4, **dadurch gekennzeichnet, daß** die Netzzugangseinrichtung (3, 4) Mittel aufweist, um eine verschlüsselte digitale Kopie, die die Netzzugangseinrichtung (3, 4) über eine Anschlußeinrichtung an das Telekommunikationsnetz (2) erhalten hat zu entschlüsseln.

6. Netzzugangseinrichtung (3, 4) nach Anspruch 4, **dadurch gekennzeichnet, daß** die Netzzugangseinrichtung (3, 4) Mittel aufweist, um die digitale Kopie nach dem Einprägen des digitalen Wasserzeichens und vor dem Senden zum Endteilnehmergerät (5-8) zu verschlüsseln.
